# EUROPÄISCHE PATENTSCHRIFT

(11) **EP 2 779 029 B1**
(45) Veröffentlichungstag und Bekanntmachung des Hinweises auf die Patenterteilung: **26.07.2017**
(21) Anmeldenummer: 13001267.7
(22) Anmeldetag: 13.03.2013
(51) Int. Cl.: G06K 19/07, G06K 19/077

(54) **Chipkarteninlay für kontaktbehaftet und kontaktlos ansprechende Chipkarten**
Chip card inlay for contact and non-contact responsive smart cards
Implant de carte à puce pour des cartes à puce à réaction par contact et sans contact

(43) Veröffentlichungstag der Anmeldung: 17.09.2014
(73) Patentinhaber: SES RFID Solutions GmbH, 40489 Düsseldorf (DE)
(72) Erfinder: Scattergood, Martin, 40489 Düsseldorf (DE)
(74) Vertreter: Henseler, Daniela

(56) Entgegenhaltungen:
- WO-A1-2012/082300
- US-A1- 2010 018 747
- US-A1- 2012 055 013
- US-A9- 2010 133 347

## Beschreibung

Die Erfindung betrifft ein Chipkarteninlay für kontaktbehaftet und kontaktlos ansprechende Chipkarten.

Chipkarten sind spezielle Plastikkarten mit einem Chip, der eine Hardware-Logik, Speicher oder auch einen Mikroprozessor enthält. Solche Chipkarten werden durch spezielle Kartenlesegeräte angesteuert. Derartige kontaktbehaftete Chipkarten sind störungsanfällig durch Abnutzung oder Verschmutzung und reagieren empfindlich auf Vibrationen, die zu kurzzeitigen Kontaktunterbrechungen führen können. Neben kontaktbehafteten Chipkarten sind deshalb auch kontaktlos ansprechende Chipkarten bekannt, die so genannten Transponderkarten, die zwei Technologien zur automatischen Identifikation und Datenerfassung miteinander vereinigen. Dazu ist der verwendete Chip an eine Antenne bzw. Spule angeschlossen, um kontaktbehaftet und kontaktlos ansprechbar zu sein.

Aus WO 2012/082300 A1 ist ein Chipkarteninlay bekannt, bei dem auf einer flächigen Substratlage eine Antenne mit endseitigen flächigen Leiterpads zum Anschließen eines Chips befestigt ist. Diese Leiterpads besitzen eine Gitterstruktur. Anspruch 1 ist gegenüber diesem Dokument abgegrenzt.

Aus US 2010/0133347 A9 ist ein Verfahren zum Herstellen einer Chipkarte bekannt, die geeignet ist zum kontaktbehafteten oder kontaktlosen Betrieb. Die Chipkarte umfasst eine Antenne, die zwei Enden oder Anschlussflächen aufweist. Die Antenne wird auf einem Unterlageblatt mit mindestens zwei Spiralwindungen und einer Isolierbrücke realisiert. Die Isolierbrücke überkreuzt die Spiralwindungen, damit die beiden Anschlussenden oder -flächen auf der gleichen Seite der Spiralwindungen liegen.

Aus US 2010/0018747 A1 und US 2012/0055013 A1 sind Anschlusspads bekannt, um eine flächige elektrische Verbindung herzustellen.

Aus DE 10 2006 054 449 A1 ist eine Transpondereinheit, insbesondere für Transponderkarten, Identifikationsdokumente oder dergleichen, bekannt, bei der die Antenne und der Chip auf einem Antennensubstrat angeordnet sind. Identifikationsdokumente und Wertkarten, wie z.B. Ausweise, Pässe, Bank- und Kreditkarten, werden regelmäßig von Personen mitgeführt und neben ihrer bestimmungsgemäßen Verwendung in Portmonees, Brieftaschen oder dergleichen dauerhaft aufbewahrt. Ein kontaktbehaftetes Ansprechen der Transponderkarte ist nicht vorgesehen.

Aus DE 101 07 072 B4 ist ein Chipkarteninlay bekannt, das ein flaches Substrat aus einem flexiblen, nichtleitenden Material wie beispielsweise PVC besitzt, auf dem ein Chip und eine Drahtspule befestigt sind. Der Chip kann auf der ebenen Oberfläche des Substrats angebracht sein. Es ist aber auch möglich, den Chip in eine Ausnehmung des Substrats einzusetzen oder den Chip im Thermokompressionsverfahren in das Substrat einzubetten. Das Anschließen des Chips mit den Anschlussfahnen an die Antennenenden beruht dabei auf einem aufwändigen Klebeverfahren dann, wenn der Chip für ein kontaktbehaftetes Ansprechen eine außenliegende Kontaktfläche aufweist.

Aufgabe der Erfindung ist es daher, ein Chipkarteninlay zu schaffen, das den Anschluss des Chips an die Antennenenden verbessert.

Diese Aufgabe wird durch die Merkmale des Anspruchs 1 gelöst.

Hierdurch wird ein Chipkarteninlay geschaffen, das ein Anschlussfeld für jedes Ende der Antenne ausbildet, das von einem Leiterpad aus einem textilen Flächengebilde mit Fadenverkreuzungen gebildet ist. Die Fadenverkreuzungen sind Bindungsstellen des textilen Flächengebildes, an denen eine Fadenhebung oder Fadensenkung stattfindet, um Fäden miteinander zu verschlingen. Das textile Flächengebilde besitzt somit fadenbedingt Höhen, Tiefen und Unregelmäßigkeiten, die eine unebene Oberfläche des textilen Flächengebildes verursachen.

Über eine leitfähige Paste oder einen leitfähigen Film, die/der auf das textile Flächengebilde aufgebracht wird und den Unebenheiten der Oberfläche folgt, kann eine dreidimensionale leitfähige Anschlussflächenstruktur gebildet sein. Alternativ können Fäden des textilen Flächengebildes leitfähig sein, beispielsweise durch Verwendung von Edelstahl, Silber, etc., wodurch über das textile Flächengebilde selbst bereits eine dreidimensionale leitfähige Anschlussflächenstruktur gebildet werden kann. Eine Oberflächen-Kontur des jeweiligen Leiterpads mit den Bindungsstellen des textilen Flächengebildes als topographische Kontaktzonen-Erhöhungen auf der leitfähigen Kontaktzone führt zu einer deutlichen Verbesserung der Anbindung des Chips an die Leiterpads. Die Adhäsion zu einem Kleber, der den Chip bzw. dessen Chipfahnen mit den Leiterpads verbindet, wird erfindungsgemäß erheblich gesteigert.

Die Verwendung eines Heißleims (hotmelt-Kleber) ist dadurch möglich, wodurch die Herstellung der Chipkarten einfacher und schneller wird. Die mechanische Verklammerung, die der abgekühlte Kleber an der Grenzfläche Klebstoff-Leiterpad erzeugt, ergibt eine dauerhafte und stabile Klebeverbindung.

Das textile Flächengebilde kann eine wählbare Porosität unabhängig von der textilen Herstellungstechnik Gewebe, Geflecht, Maschenware, Wirkware besitzen, wozu die Fadendichte einstellbar ist. Das oder die Fadensysteme der textilen Herstellungstechnik können dabei aus Metallfasern, Glasfasern und/oder Kunststofffasern bestehen. Die Fadendicken liegen vorzugsweise in einem Bereich von 25 bis 100 µm.

Weitere Ausgestaltungen und Vorteile der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.
Fig. 1 zeigt schematisch eine Draufsicht eines Kreditkarteninlays,
Fig. 2 zeigt schematisch eine Draufsicht eines textilen Flächengebildes für einen Leiterpad,
Fig. 3 zeigt schematisch eine Draufsicht eines Leiterpads mit einem textilen Flächengebilde gemäß Fig. 2 unter Hervorhebung von Kontaktzonen-Erhöhungen.

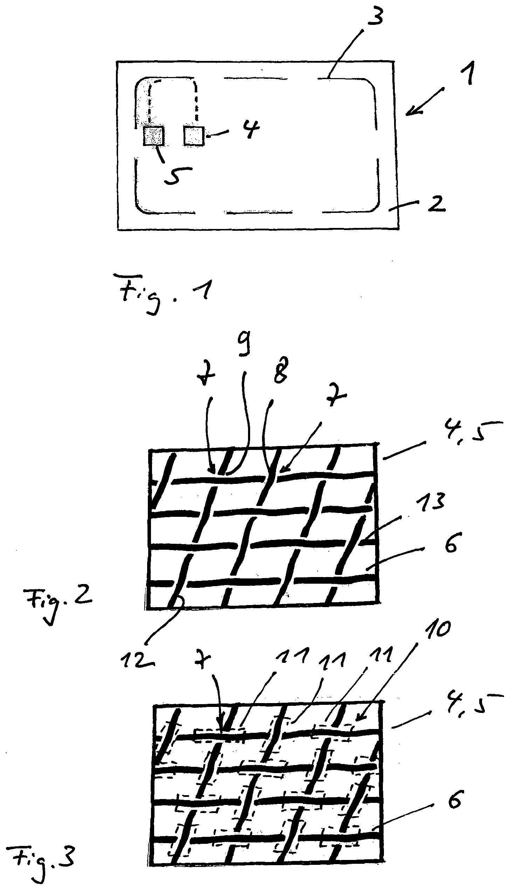

Fig. 1 zeigt ein Chipkarteninlay 1 für kontaktbehaftet und kontaktlos ansprechende Chipkarten mit einer flächigen Substratlage 2 aus einem nichtleitenden Kunststoffmaterial. Auf der Substratlage 2 ist eine Antenne 3 mit endseitigen flächigen Leiterpads 4, 5 zum Anschließen eines Chips (nicht dargestellt) befestigt. Die Antenne 3 ist in bekannter Weise vorzugsweise eine flächige Spule.

Wie Fig. 2 zeigt, sind die Leiterpads 4, 5 aus einem textilen Flächengebilde 6 mit Fadenverkreuzungen 7 gebildet, deren Bindungsstellen als Fadenhebung 8 oder Fadensenkung 9 ausgebildet sein können. Wie Fig. 3 zeigt, ist an der jeweiligen Oberseite des textilen Flächengebildes 6 eine elektrisch leitfähige Kontaktzone 10 vorgesehen, die eine dreidimensional leitfähige Anschlussflächenstruktur mit den Bindungsstellen des textilen Flächengebildes als topographische Kontaktzonen-Erhöhungen 11 aufweist zum Anschließen eines Chips.

Zur Ausbildung der leitfähigen Kontaktzone 10 kann das textile Flächengebilde 6 des Leiterpads 4, 5 jeweils mit einer aushärtbaren Silberpaste tränkbar oder mit einem aushärtbaren Konturstrich aus Silberpaste versehen sein. Alternativ kann zur Ausbildung der leitfähigen Kontaktzone 10 auf das textile Flächengebilde 6 des Leiterpads 4, 5 jeweils eine Leiterfolie aufgelegt oder aufgeprägt sein. Weiterhin alternativ oder zusätzlich kann das textile Flächengebilde 6 selbst leitfähig ausgebildet sein.

Das jeweilige textile Flächengebilde 6 kann ein Gewebe, eine Maschenware, ein Geflecht oder ein Gewirke sein. Ist eine rechtwinkelige Verkreuzung bevorzugt, wird vorzugsweise ein Gewebe verwendet, wie Fig. 2 und Fig. 3 zeigen. Kettfäden 12 bilden ein Fadensystem, das mit Schussfäden 13 in beispielsweise einer Tuchbindung verkreuzt ist. Die Fadendichte der Kettfäden 12 und Schussfäden 13 ist wählbar, wodurch die Porosität des textilen Flächengebildes 6 wählbar ist. Über die Fadendichte ist auch die Anzahl der Kontaktzonen-Erhöhungen 11 einstellbar. Das jeweilige textile Flächengebilde 6 kann dabei aus Fäden 12, 13 aufgebaut sein, die mit Abstand verkreuzt sind.

Mittels einer Maschenware können Fadenschlingen in eine andere Fadenschlinge hinein geschlungen werden. Maschenwaren liefern ferner vorzugsweise ein textiles Flächengebilde 6 mit einer größeren Porosität, abhängig von einer gewählten Maschenweite. Das jeweilige textile Flächengebilde 6 kann folglich aus einem oder mehreren Fadensystemen bestehen.

Die Fadendicken können in einem Bereich von 25 bis 100 µm liegen. Die Fadendichte ist mitbestimmend für eine Höhe der Kontaktzonen-Erhöhung 11. Die Fadenlegung einer Bindungsstelle führt mit zunehmender Fadendicke zu einer Vergrößerung der Kontaktzonen-Erhöhung 11.

Das jeweilige textile Flächengebilde 6 kann aus Fäden 12, 13 aufgebaut sein, die einen runden oder eckigen Querschnitt aufweisen. Die Fäden 12, 13 bestehen vorzugsweise aus Metallfasern, Glasfasern und/oder Kunststofffasern. Als Metallfasern sind solche aus Edelstahl bevorzugt. Ist vorgesehen, das textile Flächengebilde selbst leitfähig auszubilden, um gegebenenfalls auf eine Silberpaste zu verzichten, sind die Fäden 12, 13 teilweise oder ganz aus leitfähigem Fadenmaterial, beispielsweise Edelstahl, Kupfer, Silber oder Gold, hergestellt. Ferner bevorzugt sind Monofilamentfasern für die Fäden 12, 13.

Das nichtleitende Kunststoffmaterial der Substratlage 2 ist vorzugsweise ein thermoplastischer Kunststoff, insbesondere PVC. Die Substratlage 2 kann dabei flexibel ausgebildet sein. Mindestens eine Decklage kann auf die Substratlage 2 auflaminiert sein. Die Decklage kann eine Ausnehmung aufweisen, in die ein durch Heißleimen an den Leiterpads 4, 5 befestigbarer Chip eingesetzt bzw. eingebettet werden kann. Der so elektrisch mit den Enden der Antenne 3 verbundene Chip kann dann kontaktbehaftet und kontaktlos angesprochen werden.

Der Schichtaufbau der Chipkarte mittels Deckschichten und weitere Inlays sind unter Verwendung des erfindungsgemäßen Chipkarteninlays 1 je nach Anwendungsbereich ausbildbar.

## Patentansprüche

1. Chipkarteninlay für kontaktbehaftet und kontaktlos ansprechende Chipkarten mit einer flächigen Substratlage (2) aus einem nichtleitenden Kunststoffmaterial, auf der eine Antenne (3) mit endseitigen flächigen Leiterpads (4, 5) zum Anschließen eines Chip befestigt ist, **dadurch gekennzeichnet, dass** die Leiterpads (4, 5) aus einem textilen Flächengebilde (6) mit Fadenverkreuzungen (7) gebildet sind, wobei die Fadenverkreuzungen (7) Bindungsstellen des textilen Flächengebildes sind, welche als Fadenhebung (8) oder Fadensenkung (9) ausgebildet sind, und an der jeweiligen Oberseite des textilen Flächengebildes (6) eine elektrisch leitfähige Kontaktzone (10) vorgesehen ist, die eine dreidimensional leitfähige Anschlussflächenstruktur mit den Bindungsstellen des textilen Flächengebildes (6) als topographische Kontaktzonen-Erhöhungen (11) aufweist.

2. Chipkarteninlay nach Anspruch 1, **dadurch gekennzeichnet, dass** zur Ausbildung der leitfähigen Kontaktzone (10) das textile Flächengebilde (6) des Leiterpads (4, 5) jeweils mit einer aushärtbaren Silberpaste tränkbar oder mit einem aushärtbaren Konturstrich aus Silberpaste versehen ist.

3. Chipkarteninlay nach Anspruch 1, **dadurch gekennzeichnet, dass** zur Ausbildung der leitfähigen Kontaktzone (10) auf das textile Flächengebilde (6) des Leiterpads (4, 5) jeweils eine Leiterfolie aufgelegt oder aufgeprägt ist.

4. Chipkarteninlay nach einem der Ansprüche 1 bis 3, **dadurch gekennzeichnet, dass** zur Ausbildung der leitfähigen Kontaktzone (10) das textile Flächengebilde (6) leitfähige Fäden (12, 13) aufweist.

5. Chipkarteninlay nach einem der Ansprüche 1 bis 4, **dadurch gekennzeichnet, dass** das jeweilige textile Flächengebilde (6) ein Gewebe, eine Maschenware, ein Geflecht oder ein Gewirke ist.

6. Chipkarteninlay nach einem der Ansprüche 1 bis 5, **dadurch gekennzeichnet, dass** das jeweilige textile Flächengebilde (6) aus einem oder mehreren Fadensystemen mit Fäden (12, 13) besteht, deren Fadendicken in einem Bereich von 25 bis 100 µm liegen.

7. Chipkarteninlay nach einem der Ansprüche 1 bis 6, **dadurch gekennzeichnet, dass** das jeweilige textile Flächengebilde (6) aus Fäden (12, 13) aufgebaut ist, die einen runden oder eckigen Querschnitt aufweisen.

8. Chipkarteninlay nach einem der Ansprüche 1 bis 7, **dadurch gekennzeichnet, dass** das jeweilige textile Flächengebilde (6) aus Fäden (12, 13) aufgebaut ist, die mit Abstand verkreuzt sind.

9. Chipkarteninlay nach Anspruch 7 oder 8, **dadurch gekennzeichnet, dass** die Fäden (12, 13) aus Metallfasern, Glasfasern und/oder Kunststofffasern bestehen.

10. Chipkarteninlay nach einem der Ansprüche 1 bis 9, **dadurch gekennzeichnet, dass** das nichtleitende Kunststoffmaterial der Substratlage (2) ein thermoplastischer Kunststoff, insbesondere PVC, ist.

11. Chipkarteninlay nach einem der Ansprüche 1 bis 10, **dadurch gekennzeichnet, dass** mindestens eine Decklage auf die Substratlage (2) auflaminierbar ist, und die Decklage einen durch Heißleimen an den Leiterpads (4, 5) befestigbaren Chip in einer Ausnehmung aufweisen.

## Claims

1. Chip card inlay for contact-activated and contactlessly activated chip cards, having a planar substrate layer (2) made of a non-conductive plastics material, on which an antenna (3) having, at its ends, planar conductive pads (4, 5) for attaching a chip is fastened, wherein the conductive pads (4, 5) are formed from a textile fabric (6) having thread crossings (7), the thread crossings (7) being weave points of the textile fabric (6) which are formed as a raised thread (8) or a lowered thread (9), and on the respective surface of the textile fabric (6) an electrically conductive contact zone (10) is provided which has a three-dimensionally conductive terminal pad structure with the weave points of the textile fabric (6) as topographical contact zone elevations (11).

2. Chip card inlay according to claim 1, **characterized in that** in order to form the conductive contact zone (10), the textile fabric (6) of the conductive pad (4, 5) is in each case impregnated with a curable silver paste or is provided with a curable contour coating made of silver paste.

3. Chip card inlay according to claim 1, **characterized in that** in order to form the conductive contact zone (10), in each case a conductive film is applied to or imprinted on the textile fabric (6) of the conductive pad (4, 5).

4. Chip card inlay according to one of claims 1 to 3, **characterized in that** in order to form the conductive contact zone (10), the textile fabric (6) has conductive threads (12, 13).

5. Chip card inlay according to one of claims 1 to 4, **characterized in that** the respective textile fabric (6) is a woven fabric, a knit, a mesh or a warp knit.

6. Chip card inlay according to one of claims 1 to 5, **characterized in that** the respective textile fabric (6) consists of one or more threads systems having threads (12, 13) with thread thicknesses in a range from 25 to 100 µm.

7. Chip card inlay according to one of claims 1 to 6, **characterized in that** the respective textile fabric (6) is constructed from threads (12, 13) which have a round or angular cross section.

8. Chip card inlay according to one of claims 1 to 7, **characterized in that** the respective textile fabric (6) is constructed from threads (12, 13) which cross at a distance apart.

9. Chip card inlay according to claim 7 or 8, **characterized in that** the threads (12, 13) consist of metal fibres, glass fibres and/or synthetic fibres.

10. Chip card inlay according to one of claims 1 to 9, **characterized in that** the non-conductive plastics material of the substrate layer (2) is a thermoplastic, in particular PVC.

11. Chip card inlay according to one of claims 1 to 10, **characterized in that** at least one cover layer is laminatable onto the substrate layer (2), and the cover layer has a chip, which is fastenable to the conductive pads (4, 5) by way of hotmelt adhesives, in a recess.

## Revendications

1. Implant de carte à puce pour des cartes à puce à réaction avec contact et sans contact, comprenant une couche de substrat (2) plane composée d'un matériau synthétique non conducteur, sur laquelle une antenne (3) est fixée avec des plots conducteurs (4, 5) plats situés côté extrémité servant à raccorder une puce, **caractérisé en ce que** les plots conducteurs (4, 5) sont formés à partir d'une structure plane (6) textile comprenant des croisements de fil (7), dans lequel les croisements de fil (7) sont des points de liaison de la structure plane textile, qui sont réalisés sous la forme d'une zone soulevée de fil (8) ou d'une zone abaissée de fil (9), et une zone de contact (10) électroconductrice est prévue au niveau du côté supérieur respectif de la structure plane (6) textile, laquelle présente une structure de face de raccordement conductrice de manière tridimensionnelle, pourvue de points de liaison de la structure plane (6) textile en tant que zones surélevées (11) de zones de contact topographiques.

2. Implant de carte à puce selon la revendication 1, **caractérisé en ce que** la structure plane (6) textile du plot conducteur (4, 5) peut être imprégnée respectivement d'une pâte d'argent durcissable ou est pourvue d'un trait de contour durcissable de pâte d'argent afin de réaliser la zone de contact (10) conductrice.

3. Implant de carte à puce selon la revendication 1, **caractérisé en ce que** respectivement un film conducteur est posé ou gravé sur la structure plane (6) textile du plot conducteur (4, 5) afin de réaliser la zone de contact (10) conductrice.

4. Implant de carte à puce selon l'une quelconque des revendications 1 à 3, **caractérisé en ce que** la structure plane (6) textile présente des fils (12, 13) conducteurs afin de réaliser la zone de contact (10) conductrice.

5. Implant de carte à puce selon l'une quelconque des revendications 1 à 4, **caractérisé en ce que** la structure plane (6) textile respective est un tissu, un tricot, un tissage ou un tissu à mailles.

6. Implant de carte à puce selon l'une quelconque des revendications 1 à 5, **caractérisé en ce que** la structure plane (6) textile respective est constituée d'un ou de plusieurs systèmes de fils pourvus de fils (12, 13), dont les épaisseurs se situent dans une plage allant de 25 à 100 µm.

7. Implant de carte à puce selon l'une quelconque des revendications 1 à 6, **caractérisé en ce que** la structure plane (6) textile respective est créée à partir de fils (12, 13), qui présentent une section transversale ronde ou angulaire.

8. Implant de carte à puce selon l'une quelconque des revendications 1 à 7, **caractérisé en ce que** la structure plane (6) textile respective est créée à partir de fils (12, 13), qui sont croisés à distance.

9. Implant de carte à puce selon la revendication 7 ou 8, **caractérisé en ce que** les fils (12, 13) sont constitués de fibres de métal, de fibres de verre et/ou de fibres de matière synthétique.

10. Implant de carte à puce selon l'une quelconque des revendications 1 à 9, **caractérisé en ce que** le matériau synthétique non conducteur de la couche de substrat (2) est une matière synthétique thermoplastique, en particulier du PVC.

11. Implant de carte à puce selon l'une quelconque des revendications 1 à 10, **caractérisé en ce qu'**au moins une couche de recouvrement peut être appliquée par laminage sur la couche de substrat (2), et **en ce que** la couche de recouvrement présente dans un évidement une puce pouvant être fixée par collage à chaud aux plots conducteurs (4, 5).
